## Europäisches Patentamt

## European Patent Office

## Office européen des brevets

(19)

(11) Veröffentlichungsnummer : **0 017 742**
**B1**

(12)

# EUROPÄISCHE PATENTSCHRIFT

(45) Veröffentlichungstag der Patentschrift :
**15.12.82**

(21) Anmeldenummer : **80101067.9**

(22) Anmeldetag : **03.03.80**

(51) Int. Cl.³ : **C 03 B 37/025**, C 03 B 37/075,
C 03 C 17/02

(54) Verfahren zur Herstellung einer Multikanal-Lichtleitfaser.

(30) Priorität : **09.03.79 DE 2909390**

(43) Veröffentlichungstag der Anmeldung :
**29.10.80 (Patentblatt 80/22)**

(45) Bekanntmachung des Hinweises auf die Patenterteilung : **15.12.82 Patentblatt 82/50**

(84) Benannte Vertragsstaaten :
**FR GB**

(56) Entgegenhaltungen :
**FR A 2 240 459**
**GB A 1 223 805**
**US A 3 737 293**
**US A 3 844 752**

(73) Patentinhaber : **SIEMENS AKTIENGESELLSCHAFT**
**Berlin und München**
**Postfach 22 02 61**
**D-8000 München 22 (DE)**

(72) Erfinder : **Schneider, Hartmut, Dr.**
**Blütenstrasse 12**
**D-8000 München 40 (DE)**

EP 0 017 742 B1

Verfahren zur Herstellung einer Multikanal-Lichtleitfaser

Die Erfindung betrifft ein Verfahren zur Herstellung einer Multikanal-Lichtleitfaser mit einem Lichtleitfasermantel, in dem mehrere Lichtleitfaserkerne eingebettet sind.

Aus der DE-A-26 30 365 ist bereits ein Herstellungsverfahren bekannt. Die Herstellung erfolgt mit Hilfe eines Doppeltiegels, wobei der Außentiegel eine Düse mit beispielsweise Kreisförmigem Querschnitt und der Innentiegel eine der Anzahl der Kerne entsprechende Anzahl von Düsen aufweist. In den Außentiegel wird Material für den Lichtleitfasermantel und in den Innentiegel für den Lichtleitfaserkern eingefüllt. Die Qualität so hergestellter Lichtleitfasern ist bereits recht gut.

Der vorliegenden Erfindung liegt die Aufgabe zugrunde, ein neues Verfahren zur Herstellung einer Multikanal-Lichtleitfaser anzugeben, durch das die Qualität der Faser noch gesteigert und insbesondere die Dämpfung weiter herabgesetzt werden kann.

Diese Aufgabe wird durch ein Verfahren gelöst, welches erfindungsgemäß die kennzeichnenden Merkmale des Anspruchs 1 aufweist.

Bei diesem Verfahren lassen sich Mantel- und Kernglasschicht in höchster Reinheit auftragen, beispielsweise nach der CVD-Methode (chemical vapor deposition). Da auch beim Kollabieren und dem anschließenden Ziehen keine Verunreinigungen in die Mantel- und Kernglasschicht gelangen können, ergeben sich Lichtleitfasern mit der niedrigsten zur Zeit bekannten Dämpfung.

Beim Kollabieren wird das Quarzglasrohr in den Bereichen dünner Wandstärke, d.h. in den Bereichen, in denen die Kernglasschicht entfernt wurde, schneller zusammenfallen als in den Bereichen normaler Wandstärke. Dadurch verformt sich der Querschnitt der Rohrinnenfläche nach Art einer Acht, wenn z.B. zwei Streifen der Kernglasschicht entfernt sind. In der Taille wird das Mantelglas zusammenschmelzen, so daß sich eine der Anzahl der Streifen entsprechende Anzahl von getrennten Lichtleitfaserkernen in der Vorform ergibt. Der Durchmesser der Kerne und ihr Abstand voneinander lassen sich durch die Dicke der abgeschiedenen Kernglasschicht und die breite der entfernten Streifen dimensionieren.

In einer vorteilhaften Weiterbildung des Verfahrens ist vorgesehen, daß die Streifen der Kernglasschicht durch ein Gasphasen-Ätzverfahren entfernt werden. Dazu wird Wasserstoff, Deuterium, Wasser oder auch ein Halogenid durch das Quarzglasrohr geleitet. Ein durch eine Heizquelle erzeugter begrenzter Brennfleck wird dann gleichmäßig am Rohr entlang geführt. Als Heizquelle kann ein Knallgas-Brenner oder aber auch ein Laser verwendet werden. Der Durchmesser des Brennfleckes bestimmt die Breite des Ätzgrabens und damit die Breite des Streifens, in dem die Kernglasschicht entfernt werden soll. Durch wiederholtes Heizen läßt sich der Ätzgraben vertiefen.

Weiterhin ist es für das erfindungsgemäße Verfahren vorteilhaft, daß die Zähigkeit des Mantelglases niedriger ist als die des Kernglases. Beim Kollabieren schnürt sich das Quarzrohr dadurch noch leichter ein.

Die nach dem erfindungsgemäßen Verfahren hergestellten Multikanal-Lichtleitfasern weisen sehr geringe Verluste und ein definiertes Kopplungsverhältnis auf. Außerdem sind sie mit bekannten Einkanal-Lichtleitfasern kompatibel. Sie eignen sich daher hervorragend als Richtkoppler in Lichtleitfaser-Netzwerken oder anstelle von Strahlteilern bei interferrometrischer Lichtleitfaser-Anwendung, wie beispielsweise dem optischen Rotationssensor.

Für derartige Richtkoppler müssen die Lichtleitfaserkern eine definierte Strecke parallel geführt sein, um ein bestimmtes Kopplungsverhältnis zu erreichen ; danach müssen sie auseinandergeführt werden. Die Lichtleitfaser soll daher in Längsrichtung so spaltbar sein, daß die Lichtleitfaserenden in Teilfasern mit je einem Lichtleitfaserkern zerlegt werden können.

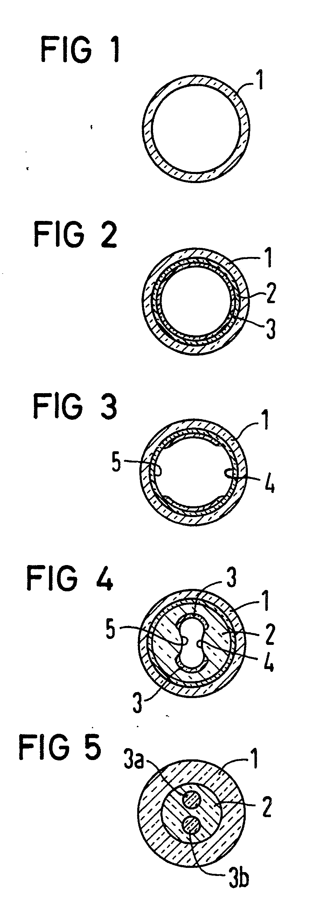

Im folgenden wird anhand der Fig. 1 bis 5 ein Ausführungsbeispiel des erfindungsgemäßen Verfahrens beschrieben und erläutert. Dabei zeigen die Fig. 1 bis 5 die einzelnen Verfahrensschritte vom Quarzglasrohr bis hin zur Lichtleitfaser-Vorform. Gleiche Teile sind mit gleichen Bezugszeichen versehen.

In Fig. 1 ist im Querschnitt ein Quarzglasrohr 1 dargestellt, das gewissermaßen als Stützrohr für die herzustellende Lichtleitfaser dient. In einem ersten Verfahrensschritt wird auf der Innenseite dieses Quarzrohres 1 nach der CVD-Methode nacheinander eine Mantelglasschicht 2 und eine Kernglasschicht 3 abgeschieden. Dieser Zustand ist in der Fig. 2 dargestellt. Der Übersichtlichkeit halber wird das Verfahren hier für eine Lichtleitfaser mit nur zwei Lichtleitfaserkernen dargestellt. Dazu muß die Kernglasschicht 3 teilweise entfernt und das darunterliegende Mantelglas freigelegt werden. Wie in der Fig. 3 dargestellt, werden zwei gegenüberliegende, parallel zur Achse des Quarzglasrohrs 1 orientierte Streifen 4 und 5 der Kernglasschicht entfernt. Entsprechend müßten für eine Lichtleitfaser mit n Lichtleitfaserkernen n Streifen entfernt werden. Die Fig. 4 zeigt den Beginn des Kollabierens. Wegen der geringeren Wandstärke in den Bereichen 4 und 5, in denen die Kernglasschicht entfernt wurde, fällt das Quarzglasrohr 1 dort schneller zusammen. Der Querschnitt der Rohrinnenfläche verformt sich nach Art einer Acht. In den Bereichen 4 und 5 wird das Mantelglas zusammenschmelzen, so daß sich zwei getrennte Lichtleitfaserkerne 3a und 3b ergeben, wie es in der abschließenden Fig. 5 dargestellt ist.

Es sei darauf hingewiesen, daß keine der Figuren maßstabsgerecht dargestellt ist. Insbesondere bei den Fig. 4 und 5 ist der Maßstab gegenüber den vorherigen Figuren geändert worden. Auch dürfte die Außenform des Quarzglasrohres 1 beim Kollabieren im Querschnitt von der Kreisform abweichen. Jedoch stellt sich trotz der Einschnürung bei ausreichender Erwärmung durch die Oberflächenspannung des Glases wieder eine im Querschnitt kreisförmige Lichtleitfaser-Vorform ein. Diese Vorform, wie sie in der Fig. 5 dargestellt ist, wird anschließend in bekannter Weise zur eigentlichen Lichtleitfaser ausgezogen. An den gegenseitigen Abstandsverhältnissen ändert sich dabei nichts mehr.

### Ansprüche

1. Verfahren zur Herstellung einer Multikanal-Lichtleitfaser mit einem Lichtleitfasermantel, in dem mehrere Lichtleitfaserkerne eingebettet sind, dadurch gekennzeichnet, daß ein Quarzglasrohr (1) auf der Innenseite mit einer Mantel- und einer Kernglasschicht (2, 3) versehen wird, daß eine der Anzahl der Faserkerne entsprechende Anzahl von symmetrisch auf dem Umfang verteilten, parallel zur Achse des Quarzglasrohres (1) liegenden Streifen (4, 5) der Kernglasschicht (3) entfernt werden, daß anschließend das Quarzglasrohr (1) mit seinen Schichten (2, 3) soweit erwärmt wird, daß es zu einer stabförmigen Vorform kollabiert, und daß diese Vorform zur Faser ausgezogen wird.

2. Verfahren nach Anspruch 1, dadurch gekennzeichnet, daß die Streifen (4, 5) der Kernglasschicht (3) durch ein Gasphasen-Ätzverfahren entfernt werden.

3. Verfahren nach Anspruch 1 oder 2, dadurch gekennzeichnet, daß die Zähigkeit des Mantelglases (2) niedriger gewählt wird als die des Kernglases (3).

### Claims

1. A process for the production of a multichannel, light-conducting fibre having a light-conducting fibre casing in which several light-conducting fibre cores are embedded, characterised in that a quartz glass tube (1) is provided with a casing glass layer and a core glass layer (2, 3) on the inside thereof ; that a number of strips (4, 5) of the core glass layer (3) which are symmetrically distributed around the circumference of and arranged parallel to the axis of the quartz glass tube (1) are removed, the number of said strips corresponding to the number of fibre cores ; that the quartz glass tube (1), together with its layers (2, 3), is subsequently heated to such an extent that it collapses to produce a rod-shaped preform ; and that this preform is drawn to form the fibre.

2. A process as claimed in Claim 1, characterised in that the strips (4, 5) of the core glass layer (3) are removed by a gas-phase etching method.

3. A process as claimed in Claim 1 or Claim 2, characterised in that the viscosity of the casing glass (2) is selected to be less than that of the core glass (3).

### Revendications

1. Procédé pour la fabrication d'une fibre optique à canaux multiples comportant une enveloppe de fibre optique dans laquelle sont noyés plusieurs cœurs de fibre optique, caractérisé par le fait qu'un tube de verre de quartz (1) est pourvu, sur sa face intérieure, d'une couche de verre d'enveloppe et d'une couche de verre de cœur (2, 3), que l'on enlève de la couche de verre de cœur (3) un nombre de bandes réparties symétriquement sur la périphérie et s'étendant parallèlement à l'axe du tube de verre en quartz (1), qui correspond au nombre de cœurs de fibre, et qu'ensuite le tube de verre de quartz (1), y compris ses couches (2, 3) est chauffé au point qu'il subit une constriction fournissant une préforme en forme de tige, et que cette préforme est étirée pour constituer la fibre.

2. Procédé selon la revendication 1, caractérisé par le fait que les bandes (4, 5) de la couche de verre de cœur (3) sont enlevées par un procédé d'attaque en phase gazeuse.

3. Procédé selon la revendication 1 ou 2, caractérisé par le fait que la ténacité du verre d'enveloppe (2) est choisie pour être inférieure à celle du verre de cœur (3).

FIG 1

FIG 2

FIG 3

FIG 4

FIG 5